# EUROPÄISCHE PATENTSCHRIFT

(11) **EP 3 635 472 B1**
(45) Veröffentlichungstag und Bekanntmachung des Hinweises auf die Patenterteilung: **15.09.2021**
(21) Anmeldenummer: 18730326.8
(22) Anmeldetag: 06.06.2018
(51) Int. Cl.: G02B 27/01

(54) **HEAD-UP-DISPLAY**
HEAD-UP DISPLAY
AFFICHAGE TÊTE HAUTE

(30) Priorität: 09.06.2017 DE 102017209787
(43) Veröffentlichungstag der Anmeldung: 15.04.2020
(73) Patentinhaber: Continental Automotive GmbH, 30165 Hannover (DE)
(72) Erfinder: PLAGENS, Nico, 63739 Aschaffenburg (DE); BRÖMME-JÁRTIMOVÁ , Dirk, 79252 Stegen (DE); ESCHENBACH, Bertram, 63934 Röllbach (DE); KRÜGER, Daniel, 65824 Schwalbach a. Ts. (DE)
(74) Vertreter: Continental Corporation
(86) Internationale Anmeldenummer: PCT/EP2018/064865
(87) Internationale Veröffentlichungsnummer: WO 2018/224533

(56) Entgegenhaltungen:
- EP-A1- 2 843 652
- DE-A1-102015 217 938
- US-A1- 2016 335 959
- US-A1- 2018 017 794

## Beschreibung

Die vorliegende Erfindung betrifft ein einen Spiegel aufweisendes Head-Up-Display. Head-Up-Displays werden in Fahrzeugen, beispielsweise Kraftfahrzeugen, eingesetzt, um eine Information, beispielsweise eine Information über den Fahrzeugzustand, in das Sichtfeld des Fahrers zu projizieren und mit der Umgebung zu überlagern.

Die US 2016/0335959 A1 zeigt ein Head-Up-Display mit einer Lichtquelle, einem Anzeigeelement, zumindest einem Spiegel, einer Photodiode, einem Spiegelelement, und einem zwischen Lichtquelle und Spiegel angeordneten Ausleuchtungshomogenisierungselement. Dabei ist der Spiegel teildurchlässig, und reflektiert einen Teil des auf ihn auftreffenden Lichts auf die Photodiode, welche Teil eines Regelkreises zur Regelung des Lichtstroms der Lichtquelle ist. Nur das den teildurchlässigen Spiegel passierende, also transmittierende Licht steht zur Erzeugung eines virtuellen Bildes zur Verfügung. Dieses wird mittels des Spiegelelements, hier der Windschutzscheibe eines Fahrzeugs, mit der Umgebung überlagert. Als nachteilig an diesem bekannten Head-Up-Display ist anzusehen, daß der Spiegel ausschließlich dazu dient, Licht auf die Photodiode zu lenken. Er kostet Geld, benötigt Bauraum und läßt nur einen Teil des auf ihn einfallenden Lichts passieren, was den zur Bilderzeugung zur Verfügung stehenden Lichtstrom reduziert.

Aus der EP 3 163 873 A1 ist eine Laserprojektionsanzeige bekannt, die einen stark wellenlängenabhängigen teildurchlässigen Spiegel zum Auskoppeln von Licht auf eine Photodiode eines Lichtstromregelkreises aufweist. Hier besteht eine starke Wellenlängenabhängigkeit, da es sich um einen dichroitischen Spiegel, um einen sogenannten Interferenzspiegel oder Interferenzfilter handelt. Solche speziellen Bauteile sind aufwendig in der Herstellung und damit relativ teuer. Auch hier wird die gesamte Spiegelfläche zum Auskoppeln verwendet, der Lichtstrom des den teildurchlässigen Spiegel passierenden Lichtes ist somit stark reduziert. Diese Reduktion des transmittierenden Lichtstroms ist nachteilig für die Erzeugung eines möglichst hellen virtuellen Bildes.

Die EP 2 843 652 A1 zeigt ein Head-Up-Display mit einem Spiegel und einem dahinter angebrachten Sensor. Die DE 10 2015 217 938 A1 betrifft ein mikromechanisches Bauelement für ein mikrospiegelbasiertes Lasersystem.

Ein demgegenüber verbessertes Head-Up-Display ist wünschenswert.

Ein Head-Up-Display gemäß der Erfindung weist eine Lichtquelle auf, ein Anzeigeelement, zumindest einen Spiegel, eine Photodiode und ein Spiegelelement. Der zumindest eine Spiegel weist eine Spiegelfläche auf, die an zumindest einer Stelle ein Loch aufweist. Die Photodiode ist im Strahlengang des das Loch passierenden Lichts in Strahlrichtung hinter dem Loch angeordnet. Dies hat den Vorteil, daß kein separates Bauteil zum Auskoppeln des auf die Photodiode fallenden Lichts erforderlich ist, da der Spiegel ein ohnehin im Strahlengang einer bildgebenden Einheit des Head-Up-Displays befindliches Bauteil ist, welches die zusätzliche Funktion des Auskoppelns von Licht für die Photodiode erhält. Ein Loch in einem Spiegel ist kostengünstig herstellbar, sodaß nicht nur Bauraum sondern auch Herstellungskosten gespart werden. Nimmt das Loch nur einen geringen Anteil der Spiegelfläche ein, so tritt auch nur ein geringer Lichtstromverlust auf. Dadurch hat das System eine hohe optische Effizienz. Ein Lichtstromverlust durch verlustbehaftetes Passieren einer teildurchlässigen optischen Schicht tritt nicht auf, da das einfallende Licht kein zusätzliches optisches Element durchlaufen muß und somit kein absorptionsbedingter Lichtstromverlust entsteht.

Die Lichtquelle erzeugt Licht, das vom Anzeigeelement moduliert wird. Das Anzeigeelement wird von einem Signalgenerator angesteuert und erzeugt ein reelles Bild entsprechend dem darzustellenden Bild, welches im weiteren Verlauf des Strahlengangs in ein virtuelles Bild transformiert wird, welches durch das Spiegelelement dem Bild der Umgebung zur Anzeige überlagert wird. Der zumindest eine Spiegel lenkt Licht im Strahlengang auf ein weiteres optisches Element, beispielsweise das Spiegelelement, einen weiteren Spiegel, oder das Anzeigeelement. Die Photodiode transformiert die einfallende Strahlungsleistung in einen der Bestrahlungsstärke proportionalen Photostrom. Dieser wird als Meßgröße für eine indirekte Lichtstrommessung genutzt. Der Lichtstrom korreliert mit der Bildhelligkeit. Das Ausgangssignal der Photodiode wird in einer Regelschleife dazu genutzt, den von der Lichtquelle abgegebene Lichtstrom auf dem gewünschten Wert zu halten. Bei farbiger Anzeige dient die Photodiode vorteilhafterweise dazu, den Lichtstrom von Farbanteilen im von der Lichtquelle, die in diesem Fall oft aus mehreren einzelnen Lichtemittern für unterschiedliche Wellenlängen besteht, abgegebenen Licht zu messen, um gegebenenfalls einen Weißabgleich oder eine andere Anpassung der Farbverteilung durchzuführen. Dabei wird bei zeitlich aufeinanderfolgenden Farbsignalen ein im jeweiligen Zeitraum des Farbsignals gemessenes entsprechendes Signal der Photodiode verwendet. Wenn alle Farbsignale gleichzeitig vorliegen sind mehrere Photodioden vorgesehen, die auf die unterschiedlichen Wellenlängen ansprechen. Eine andere Ausführung sieht nur eine Photodiode vor und ein Filterrad mit entsprechend der verwendeten Wellenlänge ausgelegten Farbfiltern.

Das Spiegelelement dient dazu, das vom Anzeigeelement kommende Licht in das Auge eines Betrachters zu lenken. Als Spiegelelement dient beispielsweise die Windschutzscheibe des Fahrzeugs oder ein sogenannter Combiner. Beide dienen dazu, das vom Anzeigeelement kommende Licht, gegebenenfalls nach dem Passieren weiterer optischer Elemente, beispielsweise einem Konkavspiegel, dem aus der Umgebung kommenden Licht zu überlagern, und somit für den Betrachter ein virtuelles Bild der Anzeige dem Bild der Umgebung zu überlagern. Ein solcher Konkavspiegel hat die Funktion, das reelle Bild des Anzeigeelements in ein vergrößertes virtuelles Bild zu transformieren.

Die Spiegelfläche des zumindest einen Spiegels kann sowohl eben sein als auch gekrümmt. Die Spiegelfläche weist zumindest an einer Stelle ein Loch auf, welches nur einen geringen Anteil der gesamten Spiegelfläche einnimmt. Befinden sich an mehreren Stellen Löcher, so sind diese jeweils entsprechend noch kleiner und führen zu einer noch geringfügigeren Beeinträchtigung des reflektierten Lichtbündels und sind somit für den Betrachter noch unauffälliger als ein einzelnes Loch. Eine höhere Anzahl Löcher dient zu einer Reduktion der durch das Loch im Spiegel entstehenden Artefakte im virtuellen Bild des Head-Up-Displays. Am Loch wird das auf die Spiegelfläche fallende Licht nicht entsprechend einem durch die Spiegelfläche vorgegebenen Winkel abgelenkt, sondern aus dem auf die Spiegelfläche einfallenden Hauptlichtstrom ausgekoppelt. Der ausgekoppelte Lichtanteil wird nicht entsprechend dem durch die Spiegelfläche vorgegebenen Winkel reflektiert, sondern passiert den Spiegel durch das Loch. Die Photodiode ist hinter dem Loch angeordnet, das heißt im Strahlengang des das Loch passierenden Lichts. Sie kann vorteilhafterweise auch direkt im Loch angeordnet sein.

Erfindungsgemäß ist vorgesehen, daß das Loch eine Bohrung in einem die Spiegelfläche tragenden Substrat ist. Dies hat den Vorteil, daß die Bohrung vor dem Auftragen der Spiegelfläche in das Substrat eingebracht werden kann, sodaß diese unbeeinträchtigt vom Herstellen der Bohrung aufgebracht werden kann. Dies ermöglicht eine kostengünstige Herstellung und verhindert eine über das Vorhandensein des Lochs hinausgehende Beeinträchtigung der optischen Eigenschaften der Spiegelfläche durch das Loch. Die Bohrung kann sowohl senkrecht zur Spiegelfläche angeordnet sein, beispielsweise wenn die Photodiode direkt in der Bohrung angeordnet wird, als auch vorteilhafterweise in einem von 90° abweichenden Winkel zur Spiegelfläche entsprechend dem Einfallswinkel des auf die Spiegelfläche treffenden Lichtbündels. Die Bohrung kann sowohl durch Bohren in das Substrat eingebracht werden, als auch auf andere Art und Weise. Beispielsweise kann bei einem Kunststoffsubstrat die Bohrung schon bei der Herstellung des Substrats freigehalten werden.

Vorteilhafterweise weist die Bohrung einen sich in Richtung der Bohrung verändernden Durchmesser und damit einen sich entsprechend verändernden Querschnitt auf. Dies hat den Vorteil, daß die mechanische Stabilität des Substrats nur geringstmöglich beeinflußt wird. Damit wird gewährleistet, daß die Spiegelfläche auch unter mechanischer, thermischer oder anderer Belastung des Substrats ihre Soll-Form möglichst beibehält, ihre optischen Eigenschaften also möglichst nicht beeinträchtigt werden. Bei divergenten oder mit parallelen Strahlen auf die Spiegelfläche fallenden Lichtbündeln verjüngt sich der Querschnitt von der der Spiegelfläche abgewandten Seite des Substrats her kommend um an der Spiegelfläche den kleinsten Querschnitt aufzuweisen. Bei konvergent auf die Spiegelfläche fallendem Lichtbündel verläuft die Querschnittsänderung entsprechend andersherum. Der Querschnitt kann auch gestuft sein, beispielsweise um keine scharfe Kante angrenzend an die Spiegelfläche aufzuweisen.

Erfindungsgemäß ist vorgesehen, daß die Bohrung zumindest in ihrem der Spiegelfläche benachbarten Bereich auf ihrer Innenfläche verspiegelt ist. Dies hat den Vorteil daß eine Absorption von an die Wandung der Bohrung, also an ihre Innenfläche, gelangendem Licht verhindert wird, sodaß möglichst das gesamte durch das Loch fallende Licht zur Photodiode gelangt. Vorteilhafterweise wird beim Aufbringen der Spiegelfläche auch die Bohrung oder zumindest deren oberer Teil verspiegelt. Falls die Spiegelfläche aufgedampft wird, so schlagen sich in die Bohrung gelangende Partikel an deren Wandung wieder, und verspiegeln diese dabei. Zumindest im oberen Bereich der Bohrung ist die Verspiegelung dabei nahezu so gut, wie auf der Spiegelfläche, was insbesondere dann sinnvoll ist, wenn der obere Bereich der Bohrung gestuft ist.

Gemäß einer Variante der Erfindung ist vorgesehen, das Loch durch eine unverspiegelte Stelle in der Spiegelfläche zu bilden. Dies hat den Vorteil, daß eine unverspiegelte Fläche leicht herstellbar ist, beispielsweise mittels einer Maske beim Verspiegeln eines Substrats, durch Einbrennen eines Lochs in die Spiegelfläche, beispielsweise durch einen Laserpuls, durch fokussiertes inkohärentes Licht, oder durch ähnliches, oder durch Aufbringen eines Materials, welches das Spiegelmaterial am Substrat nicht anhaften läßt, oder durch ähnliche Maßnahmen. Das Substrat ist dabei lichtdurchlässig, zumindest im Bereich des Lochs und dessen näherer Umgebung, und die Photodiode wird hinter dem lichtdurchlässigen Teil des Substrats angeordnet. Das Substrat wird bei dieser Variante in seinen mechanischen und thermischen Eigenschaften nicht beeinträchtigt. Ist das gesamte Substrat einheitlich lichtdurchlässig ausgelegt, so hat es auch über dessen gesamte Ausdehnung einheitliche oder zumindest sich nur stetig ändernde Eigenschaften, ein an Materialgrenzen möglicher Sprung in den Eigenschaften tritt nicht auf.

Vorteilhafterweise ist der Spiegel im Strahlengang nachfolgend an ein Ausleuchtungshomogenisierungselement angeordnet. Dies hat den Vorteil, daß Licht, welches das Ausleuchtungshomogenisierungselement verläßt, eine über den Strahlquerschnitt sehr homogene Intensitätsverteilung aufweist, sodaß das mittels des Lochs ausgekoppelte und von der Photodiode detektierte Licht eine repräsentative Lichtstrommessung ermöglicht, ohne sich an einer präzise definierten Position befinden zu müssen. Ein zeit- und kostenaufwendiger Justiervorgang bei der Herstellung - insbesondere beim Zusammenbau der Einzelelemente - wird somit vermieden.

Bei dem Spiegel handelt es sich dabei insbesondere um einen Faltspiegel. Dieser ist dazu vorgesehen, den Strahlengang zu falten um die optischen Elemente, beispielsweise Lichtquelle und Anzeigeelement, möglichst platzsparend anzuordnen. Als Ausleuchtungshomogenisierungselement ist beispielsweise ein abbildendes Mikrolinsenarray zusammen mit einer sich in Strahlrichtung hinter dem Mikrolinsenarray befindlichen Linse vorgesehen.

Weitere Einzelheiten und Vorteile der Erfindung lassen sich auch der nachfolgenden Beschreibung von Ausführungsbeispielen anhand von Figuren entnehmen. Dabei zeigen:
- Fig.1: Fahrzeug mit erfindungsgemäßem Head-Up-Display
- Fig.2: erfindungsgemäßes Head-Up-Display
- Fig.3: Prinzipskizze der Lichtauskopplung mittels Loch
- Fig.4: Variante eines Spiegels mit Loch
- Fig.5: Variante eines Spiegels mit Loch
- Fig.6: Varianten eines Spiegels mit Loch
- Fig.7: Lichtquelle eines Head-Up-Displays

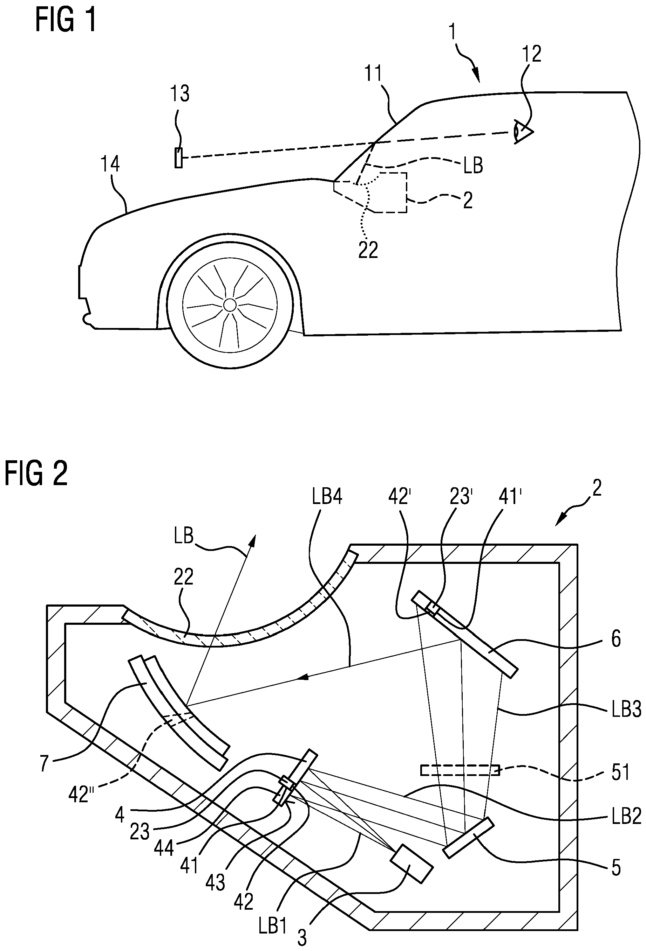

Fig.1 zeigt ein Fahrzeug 1 mit einem erfindungsgemäßen Head-Up-Display 2, welches eine lichtdurchlässige Öffnung 22 aufweist. Durch diese tritt ein Lichtbündel LB aus, welches vom Head-Up-Display 2 kommend auf eine Windschutzscheibe 11 des Fahrzeugs fällt, und von dort Richtung Auge 12 eines Betrachters reflektiert wird. Für den Betrachter erscheint ein virtuelles Bild 13 vor der Windschutzscheibe 11 über der Motorhaube 14 des Fahrzeugs. Die Windschutzscheibe 11 dient hier als Spiegelelement 21 des Head-Up-Displays. Details zum Inneren des Head-Up-Displays 2 werden anhand der folgenden Figuren beschrieben. Dabei sind gleiche oder gleichwirkende Elementen mit gleichen Bezugszeichen versehen, und werden zu nachfolgenden Figuren nur dann näher beschrieben, wenn dies dem Verständnis förderlich erscheint.

Fig.2 zeigt ein erfindungsgemäßes Head-Up-Display 2. Man erkennt die Lichtquelle 3, von der aus ein Lichtbündel LB1 auf einen Spiegel 4 fällt. Von dort wird es als Lichtbündel LB2 auf ein Anzeigeelement 5 geleitet. Das Anzeigeelement 5 wird von einer hier nicht dargestellten Steuerungseinheit angesteuert und prägt dem Lichtbündel LB2 ein Bild auf, welches der Betrachter als virtuelles Bild 13 zu sehen bekommen soll. Das Anzeigeelement 5 ist hier als reflektierendes Anzeigeelement dargestellt, beispielsweise als LCoS-Display als reflektierende Flüssigkristallanzeige, als Anordnung vieler kleiner steuerbarer Mikrospiegel, einem sogenannten "Digital Micro Mirror Device", auch DMD genannt, oder einem in X- und Y-Richtung verkippbaren Mikrospiegel. Letzterer ist beispielsweise als sowohl in X- als auch in Y-Richtung bewegbarer 2D-MEMS-Scanning-Spiegel oder als zwei in jeweils eine dieser Richtungen bewegbare 1D-MEMS-Scanning-Spiegel realisiert. Mittels diesen wird ein darzustellendes Bild zeilenweise gerastert dargestellt. Dabei steht MEMS für ein Mikrosystem, auf englisch "Micro Electro Mechanical System", 1D steht für eindimensional, und 2D für zweidimensional. Alternativ dazu kann statt des reflektierenden Anzeigeelements 5 ein durchscheinendes Anzeigeelement 51 vorgesehen sein. In diesem Fall ist statt des reflektierenden Anzeigeelements 5 an dessen Stelle ein Spiegel vorgesehen. Als durchscheinendes Anzeigeelement 51 ist beispielsweise ein TFT-Display als Flüssigkristallanzeige vorgesehen. Das Lichtbündel LB3 trifft auf einen weiteren Spiegel 6, von dem es auf einen Konkavspiegel 7 fällt, der es als Lichtbündel LB durch eine Öffnung 22 des Head-Up-Displays 2 Richtung Windschutzscheibe 11 leitet. Der Einfachheit halber ist das Lichtbündel LB, LB4 hier nur durch einen zentralen Strahl dargestellt. Die Krümmung des Konkavspiegels 7 kompensiert eine Krümmung der Windschutzscheibe 11, sodaß der Betrachter ein unverzerrtes virtuelles Bild 13 zu sehen bekommt. Die Krümmung hat weiterhin die Funktion das reelle Bild des Anzeigeelements 5 zu vergrößern und es in ein virtuelles Bild zu transformieren. Die Funktion des Konkavspiegels 7 kann in einer hier nicht dargestellten Variante auch durch eine Linse oder ein Hologramm erfüllt werden. Auch bei einem solchen oft als "spiegellos" bezeichneten Head-Up-Display gibt es Spiegel, die gemäß der Erfindung mit einem Loch in der Spiegelfläche versehen werden können.

Im Spiegel 4 ist eine Photodiode 23 in einer Bohrung 41 angeordnet. Die Bohrung 41 schließt sich an ein Loch 42 in einer Spiegelfläche 43 des Spiegels 4 an. Sie befindet sich in einem Substrat 44 des Spiegels 4. Das Ausgangssignal der Photodiode 23 wird einem hier nicht dargestellten Regler zugeführt, der die Ausgangsleistung der Lichtquelle 3 regelt.

Alternativ zur Anordnung des Lochs 42 im Spiegel 4 ist vorgesehen, ein Loch 42' in dem auf das Anzeigeelement 5 im optischen Strahlengang nachfolgend angeordneten Spiegel 6 anzuordnen. Auch hier ist die Photodiode 23' in einer Bohrung 41' angeordnet. Diese Anordnung hat den Vorteil, daß auch ein Einfluß der Helligkeit oder der Reflektivität des Anzeigeelements 5 in die Regelung der Lichtintensität eingeht. Auf diese Weise können alterungsbedingte oder umgebungsbedingte Einflüsse auf die Eigenschaften des Anzeigeelements 5, wie Temperatur, Luftfeuchtigkeit, Trübung oder ähnliches, ausgeglichen werden. Allerdings liegt hier nicht zu jeder Zeit die gleiche Lichtintensität im Bereich des Lochs 42' vor, da diese ja über das Anzeigeelement 5 moduliert ist. In diesem Fall bietet es sich an, den Intensitätswert der Anzeige für den Bereich des Lochs 42' als Istwert für die Intensitätsregelung zu verwenden. Eine alternative Lösung liegt darin, die Intensitätsregelung nur dann durchzuführen, wenn eine definierte Intensität am Ort des Lochs 42' zu erwarten ist. Dies ist beispielsweise dann der Fall, wenn ein Testzyklus des Head-Up-Dislays, beispielsweise direkt nach dem Anschalten, durchgeführt wird, oder wenn die entsprechende Stelle des Anzeigeelements 5 ein helles Darstellungselement zur Anzeige bringt. Um mögliche Irritationen des Nutzers zu reduzieren ist vorgesehen, daß sich das Loch 42' in einem Bereich des Spiegels 6 befindet, auf den üblicherweise kein Licht fällt. Dies ist dann der Fall, wenn sich dort zu keiner Zeit eine anzuzeigende Information befindet, wenn also dieser Bereich nicht benötigt wird, um von dem Anzeigeelement 5 kommendes Licht zu reflektieren, weil der entsprechende Bereich des Anzeigeelements nie aktiviert wird. Dies wird beim Auswählen der anzuzeigenden Informationen berücksichtigt. Lediglich während des Testzyklus wird durch den diesem Bereich des Spiegels 6 entsprechenden Bereich des Anzeigeelements ein Lichtpunkt erzeugt.

Eine weitere alternative Ausführung besteht darin, daß im Konkavspiegel 7 ein Loch 42" angeordnet ist. Dieses ist hier gestrichelt angedeutet. Die hinter dem Loch 42" befindliche Photodiode ist in dieser Abbildung nicht dargestellt. Zur Signalauswertung gilt bei dieser Ausführung ähnliches wie zur zuvor beschriebenen Alternative. Ein Vorteil der Anbringung eines Lochs im Konkavspiegel 7 besteht darin, daß dieser ohnehin auf ein bestimmtes Fahrzeug oder sogar auf eine bestimmte von mehreren unterschiedlichen für ein Fahrzeug vorgesehenen Formen von Windschutzscheiben angepaßt hergestellt wird. Das Vorsehen des Lochs 42" bedeutet in diesem Fall nur einen geringen zusätzlichen Aufwand. Für die anderen Spiegel werden dann Standardbauteile verwendet, die aufgrund großer Stückzahlen kostengünstig sind.

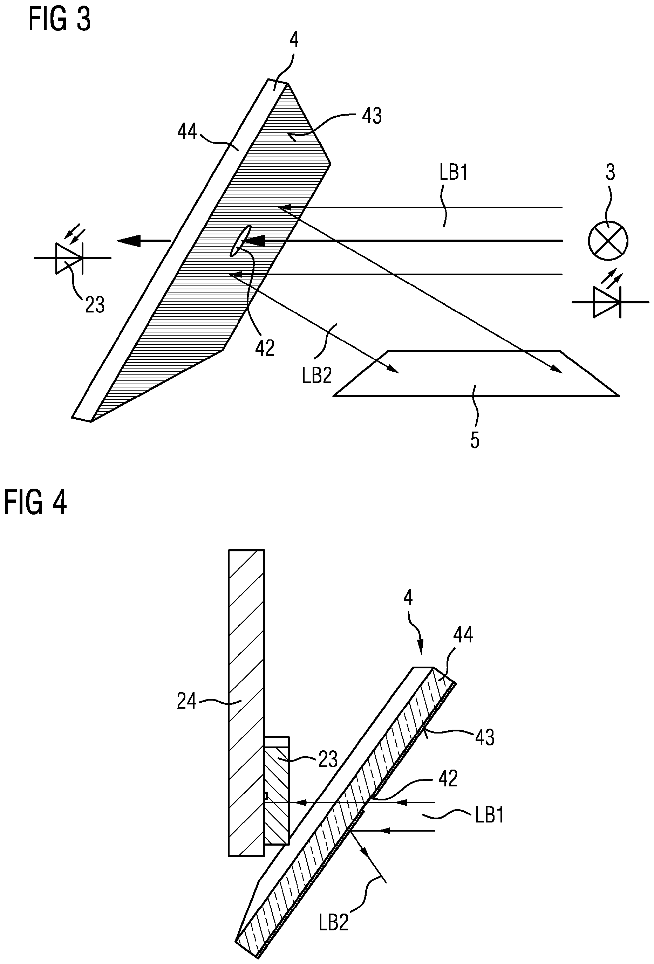

Fig.3 zeigt eine Prinzipskizze der Lichtauskopplung mittels Loch im Spiegel eines erfindungsgemäßen Head-Up-Displays, insbesondere von dessen bildgebender Einheit, die auch als PGU bezeichnet wird, in der nur wenige, zum Verständnis der Erfindung wichtige Bauteile gezeigt sind. Eine Lichtquelle 3 ist hier als Leuchtdiode symbolisiert, aber auch andere Lichtquellen sind hier sinnvoll einsetzbar. Sie erzeugt ein Lichtbündel LB1, welches auf den Spiegel 4 fällt. Von dort wird es als Lichtbündel LB2 in Richtung des Anzeigeelements 5 reflektiert. In der Spiegelfläche 43 des Spiegels 4 befindet sich ein Loch 42, durch das ein Teil des auf die Spiegelfläche 43 fallenden Lichtbündels LB1 auf die Photodiode 23 fällt. Das Substrat 44, auf dem die Spiegelfläche 43 des Spiegels 4 aufgebracht ist, besteht hier aus Glas, sodaß das durch das Loch 42 fallende Licht das Substrat 44 passieren kann. Anstatt aus Glas kann das Substrat auch aus einem lichtdurchlässigen Kunststoff bestehen.

Fig.4 zeigt eine Variante eines Spiegels 4 einer bildgebenden Einheit eines erfindungsgemäßen Head-Up-Displays. Auch hier besteht das Substrat 44 aus Glas und in der Spiegelfläche 43 befindet sich ein Loch 42. Das Lichtbündel LB1 wird von der Spiegelfläche 43 als Lichtbündel LB2 reflektiert. Nur der auf das Loch 42 fallende Anteil des Lichtbündels LB1 passiert das Substrat 44 und fällt auf die Photodiode 23. Diese ist auf einer Leiterplatte 24 angeordnet, die außer diesem noch weitere, hier nicht dargestellte Bauelemente trägt.

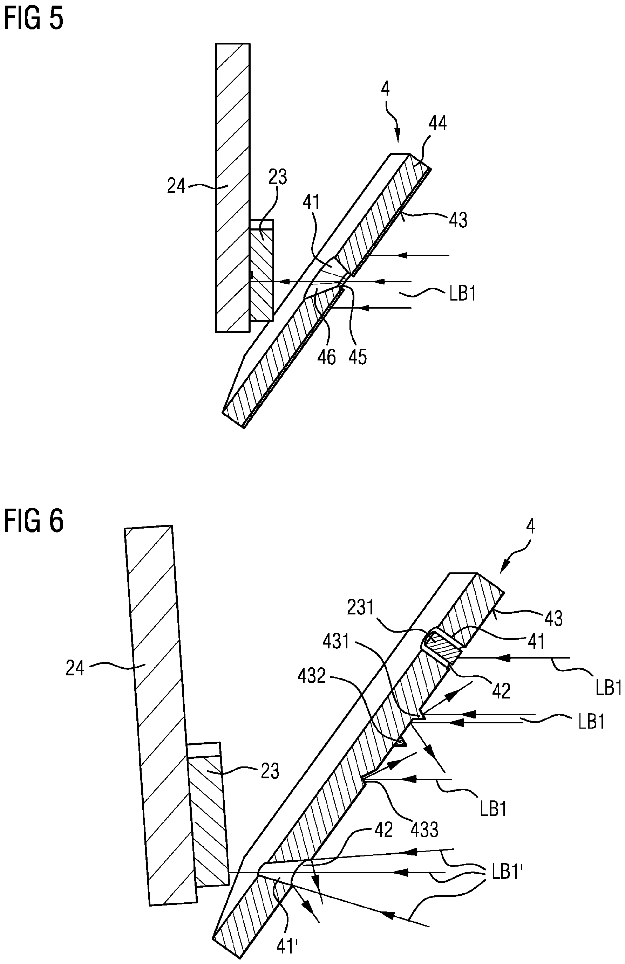

Fig.5 zeigt eine weitere Variante eines Spiegels 4 einer bildgebenden Einheit eines erfindungsgemäßen Head-Up-Displays. Das Substrat 44 besteht hier aus einem lichtundurchlässigen Material und weist eine Bohrung 41 auf. Die Bohrung 41 ist als Durchbruch ausgeführt, der nicht notwendigerweise rotationssymmetrisch oder zylindrisch ist, sondern - wie hier gezeigt - konisch mit im Winkel zur Normalen der Spiegelfläche 43 verlaufender Achse. Durch diese Bohrung 41 fällt ein Teil des auf die Spiegelfläche 43 fallenden Lichtbündels LB1 auf den Sensor 23, der sich auf einer Leiterplatte 24 befindet. Die Bohrung 41 weist einen Querschnitt auf, der sich von der der Photodiode 23 zugewandten Seite des Spiegels 4 her kommend zu deren mit der Spiegelfläche 43 versehenen Seite zu verjüngt. An dieser Seite weist die Bohrung 41 einen Bereich 45 konstanten Querschnitts auf, der mit dem Bereich 46 sich verjüngen Querschnitts eine Stufe bildet. Der Bereich 45 konstanten Querschnitts ist dabei so dimensioniert, daß das Substrat 44 auch an seiner dünnsten Stelle eine ausreichende mechanische Stabilität aufweist. Auch dessen thermische Stabilität ist an dieser Stelle für die im Betrieb und bei der Herstellung auftretenden Anforderungen ausreichend. Beispielsweise tritt während des Aufbringens der Spiegelfläche 43 keine Verformung des Substrats im Bereich des Lochs 42 auf, die die optischen Eigenschaften des Spiegels 4 in diesem Bereich unzulässig verschlechtern würden. Die Bohrung 41 weist dabei im Bereich 46 sich verändernden Querschnitts eine Symmetrieachse auf, die nicht senkrecht zur Spiegelfläche 43 ausgerichtet ist, sondern in Richtung des einfallenden Lichtbündels LB2. Der Bereich 45 konstanten Querschnitts ist ebenfalls verspiegelt und weist hier eine senkrecht zur Spiegelfläche 43 ausgebildete Symmetrieachse auf.

Fig. 6 zeigt weitere Varianten eines Spiegels 4 einer bildgebenden Einheit eines erfindungsgemäßen Head-Up-Displays, die nicht notwendigerweise alle gleichzeitig vorhanden sind. Im Normalfall weist ein erfindungsgemäßer Spiegel nur eine dieser Varianten auf. Im in der Figur oberen Bereich des Spiegels 4 ist eine Bohrung 41 dargestellt, die senkrecht zur Spiegelfläche 43 angeordnet ist. In der Bohrung 41 ist eine Photodiode 231 angeordnet. Das durch das Loch 42 fallende Licht gelangt somit direkt auf die Photodiode 231, sodaß die relative Ausrichtung zwischen Achse der Bohrung 41 und Richtung des einfallenden Lichtbündels LB1 keine große Rolle spielt.

Die im folgenden beschriebenen Varianten mit Reflexionselementen 431, 432, 433 sind hier nicht beansprucht. Im Bild unterhalb der Bohrung 41 ist ein Reflexionselement 431 gezeigt, welches aus der Oberfläche des Substrats 44 herausragt, und einen Teil des einfallenden Lichtbündels LB1 in eine andere Richtung reflektiert als der größte Teil der Spiegelfläche 43. Im hier dargestellten Fall ist das Reflexionselement 431 Teil des Substrats 44. Alternativ dazu ist ein Reflexionselement 432 dargestellt, welches separat auf die Spiegelfläche 43, beispielsweise durch Kleben, aufgebracht ist. Das Aufkleben stellt zwar einen weiteren Arbeitsvorgang da, kann aber je nach Gegebenheiten günstiger sein, als das Herstellen des mit dem Substrat 44 zusammenhängenden Reflexionselements 431. Auch letzteres kann durch Aufkleben auf das Substrat 44 vor dem Aufbringen der Spiegelfläche 43 angebracht werden. Alternativ ist es integraler Bestandteil des Substrats 44, beispielsweise wenn dieses als Spritzgußteil ausgebildet ist. Ein Vorsprung für das Reflexionselement 431 wird dann in der Spritzgußform entsprechend vorgesehen. Eine weitere Variante besteht darin, daß ein separates Reflexionselement in das Substrat 44 gesteckt wird und dort per Reibschluß fixiert wird. Reflexelement und Substrat 44 weisen in diesem Fall geeignet aufeinander abgestimmte Materialeigenschaften auf.

Alternativ dazu ist das Reflexionselement 433 als Ausnehmung im Substrat 44 vorgesehen. Auch hier wird ein Teil des einfallenden Lichtbündels LB1 durch Reflexion an einer Fläche des Reflexionselements 433 aus dem Hauptstrahlengang ausgekoppelt und auf eine hier nicht dargestellte Photodiode gelenkt. Gemäß einer Variante ist statt eines der Reflexionselemente 431,432,433 eine Vielzahl solcher Reflexionselemente 431,432,433 vorgesehen, die jeweils einen kleinen Teil des auf die Spiegelfläche 43 fallenden Lichts auf eine Photodiode 23 lenken. Dies hat den Vorteil, daß die Reflexionselemente 431, 432, 433 jeweils kleiner ausfallen und über eine größere Fläche verteilt sind. Sie repräsentieren damit quasi einen Mittelwert und sind unabhängiger von einer zufällig nichtrepräsentativen Intensitätsverteilung am Ort eines einzigen Lochs 42. Dies gilt ebenso für die Anordnung mehrerer Bohrungen 41, 41' . Anstatt einer Photodiode kann auch jede andere geeignete Art Fotosensor Verwendung finden.

In einer weiteren alternativen Variante ist eine Bohrung 41' vorgesehen, die sich von der mit der Spiegelfläche 43 versehenen Seite des Spiegels 4 her kommend verjüngt. Das einfallende Lichtbündel LB2' ist hier konvergent, sodaß das durch das Loch 42 in die Bohrung 41' fallende Licht dennoch nicht an deren Wandung gelangt, wenn die Bohrung 41' entsprechend der Hauptrichtung des Lichtbündels LB2' orientiert ist. Es fällt dann auch auf die Photodiode 23. Auch hier kann bei der Herstellung der Spiegelfläche 43 zumindest ein Teil der Bohrung 41' mit verspiegelt werden, was eventuelle Lichtverluste durch an die Wandung treffendes Licht reduziert, da dieses reflektiert wird und somit zur Photodiode 23 gelangt.

Die Erfindung betrifft allgemein eine Vorrichtung und Anordnung zur Beleuchtungsstärkemessung- und Weißpunktkontrolle innerhalb eines DMD-Projektors oder eines anderen Projektors. Solche Projektoren werden beispielsweise in Head-Up-Displays mit reflektierenden Anzeigeelementen oder allgemein in bildgebenden Einheiten mit reflektierenden Anzeigeelementen eingesetzt. Projektoren mit einem Digital Micro Mirror Device, kurz DMD-Projektoren genannt, kommen in der Praxis in einer Vielzahl unterschiedlicher Applikationen zur Erzeugung eines reellen Bildes zum Einsatz. Solche DMD-Projektoren verfügen unter anderem über einen DMD-Chip als Flächenlichtmodulator, das Anzeigeelement 5, und ein Beleuchtungssystem. Das Beleuchtungssystem besteht im wesentlichen aus einer oder mehreren Lichtemittern, einer oder mehreren Kollimationsoptiken, einer Strahlfaltung, einer Strahlformung, einem Ausleuchtungshomogenisierungselement und einer Strahlführung. Das Beleuchtungssystem besitzt unter anderem die Aufgabe, die Chipfläche des DMD-Chips, des Anzeigeelements 5, homogen auszuleuchten. Dabei wird eine homogenen Bestrahlungsstärke und eine telezentrische Beleuchtung auf dem DMD-Chip realisiert. Die auf das Anzeigeelement 5 einstrahlende Lichtleistung korreliert mit der Helligkeit des erzeugten virtuellen Bildes 13. DMD-Farbprojektoren bestehen entweder aus mehreren Lichtemittern, die jeweils ein unterschiedliches Lichtspektrum emittieren oder aber aus einer oder mehreren Weißlichtquellen in Kombination mit verschiedenen Farbfiltern, die auf Farbrädern angeordnet sein können. Der RGB-Farbraum eines DMD-Farbprojektors wird entweder durch additive oder zeitsequentielle Farbmischung der von den verschiedenen Lichtquellen 3 emittierten Lichtleistung realisiert.

In der Praxis ist es häufig erforderlich, den Lichtstrom der Lichtquellen 3 oder den Lichtstrom der verschiedenen Farbkanäle, beispielsweise rot, grün, und blau, meßtechnisch zu erfassen um beispielsweise die Bildhelligkeit oder den Farbort, beispielsweise den Weißpunkt, des Bildes regeln zu können. Hierzu wird ein Teil des auf das Anzeigeelement 3 einstrahlenden Lichtstroms innerhalb des Beleuchtungssystems optisch mit Hilfe eines Auskoppelelementes ausgekoppelt und auf die Photodiode 23,231 gelenkt. Die Photodiode 23,231 absorbiert die auf sie einfallende Lichtleistung und wandelt sie in einen der Beleuchtungsstärke proportionalen elektrischen Photostrom, der als Regelgröße eines Regelkreises dient.

Bei der Bewertung des Auskoppelmechanismus und des Auskoppelortes spielen unter anderem die folgenden Aspekte eine wichtige Rolle: Die Robustheit des gemessenen Photostroms gegenüber einer toleranzbedingten Änderung des Auskoppelortes. Der Justageaufwand bei der Fertigung. Die Auskoppeleffizienz. Die Beeinträchtigung der Bildqualität durch das Auskoppelelement am Auskoppelort, beispielsweise durch Abschattung, Streulichterzeugung oder ähnliches. Der erforderliche Bauraum. Die Kosten für die für die Realisierung der Auskopplung erforderlichen Bauteile. Als Auskoppelelement dient gemäß einer vorteilhaften Variante der Erfindung eine Bohrung 41 in einem Faltspiegel, dem Spiegel 4, der sich hinter dem Ausleuchtungshomogenisierungselement befindet. Die Wahl dieses Auskoppelortes hat den Vorteil, daß der Auskoppelort eine gute Robustheit gegenüber Positionstoleranzen besitzt. Die gute Robustheit gegenüber der Positionstoleranz der Bohrung ergibt sich aus der Tatsache, daß das auf den Faltspiegel einfallende Licht in lateraler Richtung aufgrund der Ausleuchtungshomogenisierung, die beispielsweise durch ein Mikrolinsenarray zusammen mit einer Linse erfolgt, eine nahezu konstante laterale Intensitätsverteilung besitzt. Ferner besitzt die Wahl dieses Auskoppelortes den Vorteil, daß keine unerwünschte Abschattung auf dem Anzeigeelement und somit im virtuellen Bild entsteht. Durch das Loch kann außerdem die bestmögliche Auskoppeleffizienz erzielt werden, was kleine Lochdurchmesser ermöglicht und somit lediglich einen sehr geringen Verlust der optischen Effizienz des Gesamtsystems bedingt. Es sei an dieser Stelle darauf hingewiesen, daß es neben der Bohrung 41 zahlreiche andere Möglichkeiten für die Realisierung des Lochs, also des Auskoppelmechanismus im Faltspiegel gibt. Gemäß einer Variante ist dies ein Spiegel 4, dessen Spiegelbeschichtung sich auf einem transparenten Substrat 44 befindet, beispielsweise Glas oder transparenter Kunststoff. Im Bereich des Auskoppelortes befindet sich auf der Spiegeloberfläche keine Spiegelbeschichtung, sodaß das auf diesen Ort auftreffende Licht durch das Spiegelsubstrat transmittieren und hinter dem Spiegel 4 von der Photodiode 23, 231 detektiert werden kann. Gemäß einer Variante ist dies ein Spiegel 4, auf dessen Oberfläche sich am Auskoppelort lokal ein oder mehrere kleine Reflexionselemente 431,432,433 befinden, die das auszukoppelnde Licht auf die Photodiode 23 lenken, die sich außerhalb des optischen Pfades des Projektors befinden kann.

Als Flächenlichtmodulator kann für das Anzeigeelement 5 auch ein als LCoS bezeichnetes Flüssigkristallelement vorgesehen sein oder ein als DMD bezeichnetes digitales Mikrospiegelgerät.

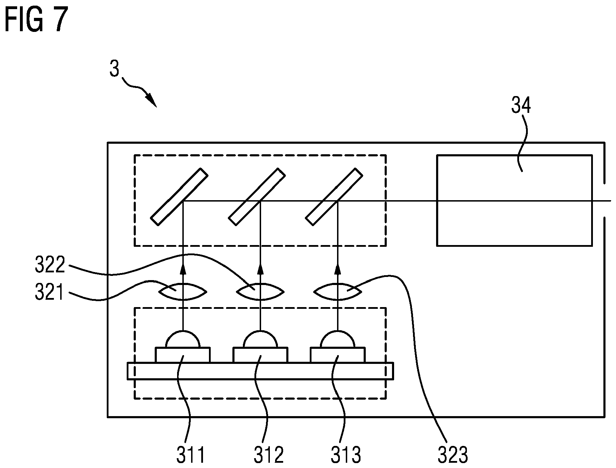

Ein Ausführungsbeispiel ist eine bildgebende Einheit, die aus einem DMD-Farbprojektor besteht und in einem Head-Up-Display zur Bilderzeugung eingesetzt wird. Ein solcher DMD-Farbprojektor besitzt eine in Fig.7 gezeigte Lichtquelle 3, die eine rote Leuchtdiode 311, eine grüne Leuchtdiode 312 und eine blaue Leuchtdiode 313 als Lichtemitter aufweist. Drei Kollimationsoptiken, hier durch Sammellinsen 321-323 illustriert, haben die Aufgabe, das von den Leuchtdioden 311-313 emittierte Licht einzusammeln und zu kollimieren. Das kollimierte Licht der drei Farbkanäle wird mittels dichroitischer Spiegel 331-333 zu einem Strahl kombiniert, gefaltet und auf ein Ausleuchtungshomogenisierungselement 34 geführt. Bei der Faltung werden die Strahlvolumina der drei Farbkanäle konzentrisch überlagert. Das von dem Ausleuchtungshomogenisierungselement 34 kommende Licht wird über eine nicht dargestellte Sammellinse und den in dieser Abbildung ebenfalls nicht dargestellten Spiegel 4 auf einen DMD-Chip, das Anzeigeelement 5, gelenkt und leuchtet dieses homogen aus. Im Spiegel 4 befindet sich die kleine Bohrung 41, die einen Teil des auf den Spiegel 4 einfallenden Lichtes auskoppelt. Hinter dem Spiegel 4, unmittelbar hinter der Bohrung 41 oder, wie in einigen der Abbildungen gezeigt, in dieser befindet sich eine Photodiode 23 zur Lichtstrommessung.

Es versteht sich, daß hier nicht alle möglichen Varianten und Abwandlungen des erfindungsgemäßen Head-Up-Displays beschrieben sind. Es liegt im Ermessen des Fachmanns, die genannten Maßnahmen abzuändern oder in anderer als der beschriebenen Art und Weise zu kombinieren.

## Patentansprüche

1. Head-Up-Display aufweisend eine Lichtquelle (3), ein Anzeigeelement (5), zumindest einen Spiegel (4), eine Photodiode (23) und ein Spiegelelement (11,21), wobei das Head-Up-Display weiterhin ein zwischen Lichtquelle (3) und Spiegel (4) angeordnetes Ausleuchtungshomogenisierungselement (34) aufweist **dadurch gekennzeichnet, daß** der zumindest eine Spiegel (4) eine Spiegelfläche (43) aufweist, die an zumindest einer Stelle ein Loch (42) aufweist, und die Photodiode (23) im Strahlengang des das Loch (42) von der Lichtquelle (3) kommend passierenden Lichts angeordnet ist.

2. Head-Up-Display gemäß Anspruch 1, **dadurch gekennzeichnet, daß** das Loch (42) eine Bohrung (41) in einem die Spiegelfläche (43) tragenden Substrat (44) ist.

3. Head-Up-Display gemäß Anspruch 2, **dadurch gekennzeichnet, daß** die Bohrung (41) einen sich in Richtung der Bohrung (41) verändernden Querschnitt aufweist.

4. Head-Up-Display gemäß einem der vorhergehenden Ansprüche, **dadurch gekennzeichnet, daß** die Bohrung (41) zumindest in ihrem der Spiegelfläche (43) benachbarten Bereich (45) verspiegelt ist.

5. Head-Up-Display gemäß Anspruch 1, **dadurch gekennzeichnet, daß** das Loch (42) durch eine unverspiegelte Stelle in der Spiegelfläche (43) gebildet ist.

6. Head-Up-Display gemäß einem der vorhergehenden Ansprüche, wobei der Spiegel (4) im Strahlengang des von der Lichtquelle (3) kommenden Lichts nach einem Ausleuchtungshomogenisierungselement (34) angeordnet ist.

## Claims

1. Head-up display having a light source (3), a display element (5), at least one mirror (4), a photodiode (23) and a mirror element (11, 21), wherein the head-up display furthermore has an illumination homogenization element (34) arranged between the light source (3) and the mirror (4), **characterized in that** the at least one mirror (4) has a mirror surface (43) which has a hole (42) at at least one location and the photodiode (23) is arranged in the beam path of the light that is coming from the light source (3) and passing through the hole (42) .

2. Head-up display according to Claim 1, **characterized in that** the hole (42) is a bore (41) in a substrate (44) that carries the mirror surface (43).

3. Head-up display according to Claim 2, **characterized in that** the bore (41) has a cross section that changes in the direction of the bore (41).

4. Head-up display according to one of the preceding claims, **characterized in that** the bore (41) is made reflective in at least its region (45) that is adjacent to the mirror surface (43).

5. Head-up display according to Claim 1, **characterized in that** the hole (42) is formed by a location in the mirror surface (43) that has not been made reflective.

6. Head-up display according to one of the preceding claims, wherein the mirror (4) is arranged in the beam path of the light coming from the light source (3) downstream of an illumination homogenization element (34) .

## Revendications

1. Affichage tête haute, présentant une source de lumière (3), un élément d'affichage (5), au moins un miroir (4), une photodiode (23) et un élément de miroir (11, 21), l'affichage tête haute présentant en outre un élément d'homogénéisation d'éclairage (34) disposé entre la source de lumière (3) et le miroir (4),
**caractérisé en ce que** ledit au moins un miroir (4) présente une surface de miroir (43) qui présente un trou (42) à au moins un endroit, et la photodiode (23) est disposée sur une trajectoire des rayons de la lumière passant par le trou (42) en venant de la source de lumière (3).

2. Affichage tête haute selon la revendication 1, **caractérisé en ce que** le trou (42) est un perçage (41) dans un substrat (44) portant la surface de miroir (43) .

3. Affichage tête haute selon la revendication 2, **caractérisé en ce que** le perçage (41) présente une section transversale variable dans le sens du perçage (41) .

4. Affichage tête haute selon l'une quelconque des revendications précédentes, **caractérisé en ce que** le perçage (41) est rendu réfléchissant au moins dans sa zone (45) voisine de la surface de miroir (43).

5. Affichage tête haute selon la revendication 1, **caractérisé en ce que** le trou (42) est formé par un endroit non réfléchissant dans la surface de miroir (43) .

6. Affichage tête haute selon l'une quelconque des revendications précédentes, dans lequel le miroir (4) est disposé sur la trajectoire des rayons de la lumière venant de la source de lumière (3) après un élément d'homogénéisation d'éclairage (34).
